# EUROPÄISCHE PATENTSCHRIFT

(11) **EP 2 045 041 B1**
(45) Veröffentlichungstag und Bekanntmachung des Hinweises auf die Patenterteilung: **25.04.2012**
(21) Anmeldenummer: 07019546.6
(22) Anmeldetag: 05.10.2007
(51) Int. Cl.: B25B 7/00, B25B 9/00

(54) **Handhabungsvorrichtung für einen Werkzeughalter mit einer Führungseinrichtung**
Handling device for a tool holder with a guide device
Dispositif de manipulation pour un support d'outil doté d'un dispositif de guidage

(43) Veröffentlichungstag der Anmeldung: 08.04.2009
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, Dipl.-Ing (FH), 78598 Königsheim (DE)
(74) Vertreter: Hager, Thomas Johannes

(56) Entgegenhaltungen:
- EP-A- 1 260 754
- DE-C1- 10 237 425
- DE-U1- 8 804 107

## Beschreibung

Die Erfindung betrifft eine Kombination aus Handhabungsvorrichtung und Werkzeugmagazin gemäß Anspruch 1.

Moderne Bearbeitungszentren sind für eine Vielzahl von unterschiedlichen Bearbeitungsaufgaben (Fräsen, Bohren, Gewindeschneiden, Drehen usw.) ausgelegt und besitzen daher in der Regel immer ein Werkzeugmagazin oder Werkzeugregal zum Lagern und Bereitstellen von diversen Bearbeitungswerkzeugen. Das einzelne Bearbeitungswerkzeug (Bohrer, Stirnfräser, Fingerfräser, Gewindebohrer, Drehmeißel usw.) ist dabei auf einem genormten Werkzeughalter befestigt. Es gibt je nach Verwendungszweck unterschiedlich genormte Werkzeughalter, die sich hauptsächlich in der Geometrie des Werkzeugschaftes unterscheiden. In einem Werkzeugmagazin können im Regelfall immer nur Werkzeuge mit dem gleichen Typ von Werkzeughalter aufgenommen werden. Im Werkzeugmagazin oder im Werkzeugregal wird der Werkzeughalter mit dem Bearbeitungswerkzeug in speziell ausgeführten Werkzeugaufnahmen gelagert. Es sind unterschiedlichste Arten von Werkzeugaufnahmen für Werkzeugmagazine und für Werkzeugregale bekannt und üblich.

Es gibt Werkzeugaufnahmen die als elastisch verformbare U-förmige Halteklammern ausgeführt sind. Bei dieser Art von Werkzeugaufnahme wird der Werkzeughalter kraft- und/oder formschlüssig von der elastisch verformbaren U-förmigen Halteklammer aufgenommen und gehalten. Gleichzeitig wird bei derartigen Werkzeugaufnahmen immer ein gewisser Kraftaufwand benötigt, um das Bearbeitungswerkzeug mit dem Werkzeughalter in die Werkzeugaufnahme hinein- oder herauszudrücken.

Des Weiteren gibt es Werkzeugaufnahmen, bei denen der Werkzeughalter nach dem Einlegen über eine kraftbetätigte Greiferzange kraft- und/oder formschlüssig gehalten wird. Hierbei ist kein großer Kraftaufwand zum Ein- oder Ausbringen der Werkzeuge aus der Werkzeugaufnahme notwendig. Der konstruktive und fertigungstechnische Aufwand für diese Art von Werkzeugaufnahmen ist aber wesentlich höher als bei den elastischen Werkzeugaufnahmen.

Weiterhin gibt es unter anderem auch noch Werkzeugaufnahmen, bei denen das Werkzeug mit dem Werkzeughalter in einen so genannten Aufnahmetopf eingelegt wird. Die Innenkontur des Aufnahmetopfs entspricht dabei der Außenkontur des Werkzeughalters. Diese Werkzeugaufnahmen werden hauptsächlich bei großen Bearbeitungszentren mit sehr großen und schweren Werkzeugen verwendet.

Die Werkzeugaufnahmen im Werkzeugmagazin oder im Werkzeugregal können entsprechend dem Anwendungsfall senkrecht oder waagrecht ausgerichtet sein. Daraus ergibt sich, dass die Werkzeuge stehend (senkrecht) oder liegend (waagrecht) gelagert werden.

Die Ausrichtung der Werkzeuge im Werkzeugmagazin oder im Werkzeugregal richtet sich in der Regel immer nach der Ausrichtung der im Bearbeitungszentrum angeordneten Bearbeitungsspindel. Bei einer waagrechten Bearbeitungsspindel werden die Werkzeuge in der Regel auch waagrecht (liegend) im Werkzeugmagazin oder im Werkzeugregal gelagert. Bei einer vertikalen Bearbeitungsspindel werden die Werkzeuge in der Regel auch senkrecht (stehend) im Werkzeugmagazin oder im Werkzeugregal gelagert.

Die Werkzeuge werden in einem Bearbeitungszentrum vom Werkzeugmagazin in die Bearbeitungsspindel ausschließlich automatisch mit Hilfe einer Wechseleinrichtung, innerhalb von wenigen Sekunden, ein- und ausgewechselt. Dies ist wirtschaftlich auch die einzig sinnvolle Lösung. Die Bearbeitungszeit des Bearbeitungszentrums, d. h. die Zeit bei der das Bearbeitungswerkzeug im Eingriff ist, soll so weit wie möglich nicht durch die Wechselzeit eingeschränkt werden. Bei einem manuellen Einwechseln von Hand wäre dieser Sachverhalt nicht mehr gewährleistet.

Das Bestücken des Werkzeugmagazins oder des Werkzeugregals mit Werkzeugen erfolgt im Rahmen der Fertigungsvorbereitung in aller Regel aber immer noch manuell von Hand. Dies ist auch wirtschaftlich sinnvoll, da die Bestückung immer außerhalb oder neben der Bearbeitungszeit des Bearbeitungszentrums erfolgt, d. h. durch die Werkzeugbestückung des Magazins oder des Regals wird in der Regel die Bearbeitungszeit des Bearbeitungszentrums nicht negativ beeinflusst. Eine automatische Bestückung mit Hilfe einer speziellen Handhabungseinrichtung, z. B. Roboter, ist somit immer noch die Ausnahme. Eine automatische Bestückung wird nur dann durchgeführt, wenn ein manuelles Handling der Werkzeuge aus ergonomischer Sicht dem Bedienpersonal nicht mehr zugemutet Werden kann, z.B. bei überschweren und/oder übergroßen Werkzeugen.

Bei der manuellen Bestückung per Hand muss das Bedienpersonal einige wichtige Dinge beachten. So müssen die Werkzeuge im Regelfall in einer bestimmten Orientierung in den Werkzeughalter des Werkzeugmagazins bzw. des Werkzeugregals eingelegt werden. Wird diese Orientierung nicht eingehalten, so kann das Werkzeug nicht in die Bearbeitungsspindel des Bearbeitungszentrums eingewechselt werden. Außerdem besteht erhöhte Klemm- und Schnittgefahr für den Bediener beim Einsetzen und beim Entnehmen der Werkzeuge. Die Schnittkanten der Bearbeitungswerkzeuge sind messerscharf. Des Weiteren ist beim Einsetzen der Werkzeuge in die Werkzeugaufnahmen unter Umständen ein recht hoher Kraftaufwand notwendig. Dies trifft insbesondere dann zu, wenn die Werkzeugaufnahme aus einer elastisch verformbaren U-förmigen Halteklammer besteht. Des Weiteren besteht die Gefahr, dass die Werkzeuge nicht korrekt in die Halteklammer eingesetzt werden und dadurch die Halteklammer beschädigt wird. Besonders kritisch ist es, wenn die Werkzeuge beim Einsetzen oder beim Entnehmen verkanten und somit nur noch mit Gewalt aus der Halteklammer entfernt werden können.

Aus diesen Gründen heraus wurden in der Vergangenheit von verschiedenen Herstellern so genannte Handwechselzangen entwickelt, um somit den Bedienern das manuelle Bestücken eines Werkzeugmagazins bzw. eines Werkzeugregals zu erleichtern. Mit diesen Handwechselzangen soll ein sicheres Halten und Führen der Werkzeuge bzw. Werkzeughalter beim manuellen Bestückungsvorgang gewährleistete werden.

In der DE 102 37 425 C1 ist eine gattungsgleiche Kombination aus Handhabungsvorrichtung und Werkzeugmagazin gemäß dem einleitenden Teil des Anspruchs 1 beschrieben.

Die darin beschriebene Handhabungsvorrichtung besitzt ein Aufnahmeelement zum Aufnehmen des Werkzeughalters. Der Werkzeughalter wird im Aufnahmeelement mit einem mechanisch zu betätigenden Verriegelungselement (z. B. mit einer mit Hand zu betätigenden Spann- bzw. Greiferzange) gegen Herausfallen gesichert. Des Weiteren ist im Aufnahmeelement ein Orientierungselement angeordnet, das eine definierte Drehwinkelposition des Werkzeughalters in dem Aufnahmeelement erzwingt und somit den Werkzeughalter eindeutig in seiner Lage definiert.

Die in der DE 102 37.425 C1 offenbarte Handhabungsvorrichtung ist in einer vorteilhaften Ausführungsform noch mit zwei Griffbereichen versehen, um so das manuelle Führen der Handwechselzange mit zwei Händen zu ermöglichen.

In der Praxis hat sich erweisen, dass das in der DE 102 37 425 C1 offenbarte Führen der Handwechselzange mit zwei Händen nicht ausreicht, um ein Verkanten beim Einlegen oder beim Entnehmen der Werkzeughalter sicher zu verhindern. Besonders, wenn die Sichtverhältnisse zur Bestückungsstelle ungenügend sind oder wenn relativ schnell die Werkzeuge ein- und ausgewechselt werden müssen, besteht die Gefahr, dass der Bediener die relativ schwere Handhabungsvorrichtung mit dem Werkzeug verkantet. Erhebliche Schäden an der Werkzeughalterung oder an der Werkzeugaufnahme können die Folge sein.

Ausgehend von diesem Stand der Technik liegt der vorliegenden Erfindung die Aufgabe zugrunde, die bekannte Lösung unter Beibehaltung ihrer Vorteile dahingehend weiter zu verbessern, dass das Führen einer Handhabungsvorrichtung beim Einführen in die Bestückungsstelle zum Einlegen oder zum Entnehmen von Werkzeughaltern gegenüber dem Stand der Technik so weit verbessert wird, dass dadurch eine ergonomisch günstige Handhabung für den Bediener möglich wird und ein Verkanten beim Bestückungsvorgang (Einlegen oder Entnehmen) ausgeschlossen werden kann.

Erfindungsgemäß wird die Aufgabe durch die Kombination aus Handhabungsvorrichtung und Werkzeugmagazin, gemäß Anspruch 1 gelöst.

Infolge dieser Ausgestaltung werden die Bewegungsmöglichkeiten der Handwechselzange im dreidimensionalen Raum beim Einführen in die Bestückungsstelle zum Einlegen oder zum Entnehmen der Werkzeughalter so weit eingeschränkt, dass nur noch eine translatorische Bewegung mit der Handwechselzange in einer Raumrichtung (X, Y oder Z) möglich ist, d. h. durch die erfindungsgemäße Vorrichtung wird die Beweglichkeit der Handhabungsvorrichtung auf eine Raumachse, nämlich eine lineare Raumachse, eingeschränkt.

Eine solche Handhabungsvorrichtung mit einer linearen Führungseinrichtung ermöglicht insbesondere ein schnelles und sicheres Einführen oder Entnehmen eines Werkzeughalters aus dem Werkzeugmagazin bzw. aus dem Werkzeugregal unter ergonomisch günstigen Gesichtspunkten.

Die Unteransprüche beinhalten vorteilhafte Weiterbildungen der Erfindung.

Das mit der Handhabungsvorrichtung verbundene erste Führungselement besteht vorteilhafterweise aus mindestens einer stabförmigen, vorzugsweise zylindrischen Führungssäule.

Weiterhin besteht das mit dem Werkzeugmagazin verbundene zweite Führungselement vorteilhafterweise aus mindestens einer hülsenförmigen Führungsbuchse zur Aufnahme der stabförmigen Führungssäule.

Nach einer bevorzugten Ausgestaltung weist das Werkzeugmagazin ein feststehendes Lagergestell für einen drehbaren Magazinring auf und die Werkzeugaufnahmen sind an dem drehbaren Magazinring befestigt.

Besonders einfach und trotzdem effektiv gestaltet sich die Handhabungsvorrichtung, wenn nach einer vorteilhaften Weiterbildung zwei parallel zueinander verlaufende und vorzugsweise in einer horizontalen Ebene angeordnete Führungssäulen vorgesehen sind, welche mit zwei an dem Lagergestell des Werkzeugmagazins befestigten Führungsbuchsen zusammenwirken.

Die beiden Führungssäulen bilden in Verbindung mit den beiden Führungsbuchsen eine Doppel-Rundführung, mit der sich eine lineare Führungseinrichtung mit relativ geringem konstruktiven Aufwand kostengünstig herstellen lässt. Außerdem sind Rundführungen generell sehr montage- und wartungsfreundlich. Außerdem muss bei Rundführungen ein relativ geringer Aufwand für Schmierung und Abdichtung betrieben werden.

Eine doppelte Rundführung hat noch den weiteren Vorteil, dass keine zusätzliche Verdrehsicherung erforderlich ist. Durch eine Doppel-Rundführung wird erreicht, dass klare Führungsverhältnisse vorliegen.

Die vorliegende Doppel-Rundführung besteht vorzugsweise aus zwei zylindrischen Führungssäulen, die jeweils in einer entsprechenden Führungsbuchse linear verschieblich geführt sind.

Die Führungssäulen sind vorzugsweise in einer horizontalen Ebene angeordnet und weisen einen Abstand zueinander auf. Je größer dieser Abstand ist, desto besser ist das Führungsverhalten der linearen Führungseinrichtung. Die Führungsbuchsen sind im vorliegenden Ausführungsbeispiel an der Bestückungsstelle des Werkzeugmagazins oder des Werkzeugregals fest angebracht, so dass der Werkzeughalter mit den Führungssäulen beim Einführen oder beim Entnehmen der Werkzeughalter in die Führungsbuchsen eingeführt werden muss.

Um eine reibungsarme Bewegung der Führungssäulen in den Führungsbuchsen zu ermöglichen, sind in diesen nach einer bevorzugten Ausgestaltung Gleit- oder Wälzlager angeordnet, welche vorteilhafterweise eingepresst sind.

Um das Einführen der Führungssäulen in die Führungsbuchsen zu erleichtern, sind die Führungssäulen an ihren Stirnseiten abgerundet und mit einer Einführungsschrägung versehen.

Jede Führungssäule ist nach einer vorteilhaften Weiterbildung in einem Befestigungsklotz gelagert, der an dem Aufnahmeelement angebracht ist.

Entgegengesetzt zum dargestellten Ausführungsbeispiel, könnten die Führungsbuchsen auch an der Handhabungsvorrichtung und die zylindrischen Führungssäulen an dem Werkzeugmagazin angebracht sein.

Es sind auch Ausführungen denkbar, bei denen die Handhabungsvorrichtung integraler Bestandteil der Bestückstelle ist und von der Bestückstelle nicht getrennt werden kann.

Weitere Einzelheiten, Merkmale und Vorteile der Erfindung ergeben sich aus nachfolgender Beschreibung anhand der Zeichnungen. Es zeigen:
- Figur 1: eine erfindungsgemäße Handhabungsvorrichtung in Verbindung mit einem Werkzeugmagazin,
- Figur 2: die erfindungsgemäße Handhabungsvorrichtung mit eingesetztem Werkzeughalter,
- Figur 3: die erfindungsgemäße Handhabungsvorrichtung ohne Werkzeughalter, und
- Figur 4: einen in Verbindung mit der erfindungsgemäßen Handhabungsvorrichtung verwendeter Werkzeughalter.

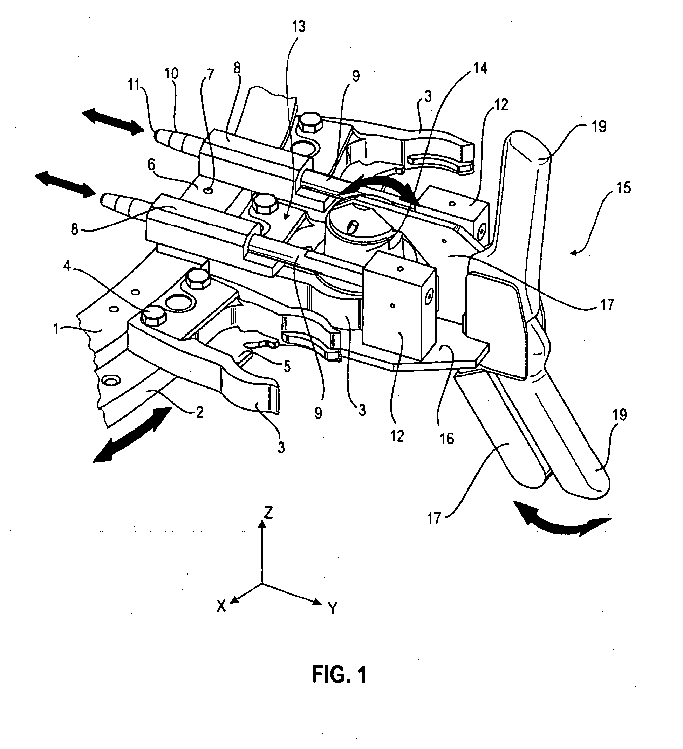

In Figur 1 ist eine erfindungsgemäße Handhabungsvorrichtung 15 in Verbindung mit einem an einer Werkzeugmaschine angeordneten Werkzeugmagazin dargestellt. Von dem Werkzeugmagazin ist lediglich ein feststehendes Lagergestell 1 gezeigt, welches zur Aufnahme eines drehbaren Magazinringes 2 dient. An dem drehbaren Magazinring 2 sind Werkzeugaufnahmen 3 angebracht, die über eine Befestigung 4, wie z. B. Schrauben an dem Magazinring 2 befestigt sind. Die Werkzeugaufnahmen 3 sind als U-förmige Halteklammer ausgebildet. In die Öffnung der Halteklammer steht ein Orientierungselement 5 vor, dessen Funktion später noch beschrieben wird.

An dem Lagergestell 1 des Werkzeugmagazins ist ein Halter 6 über eine Befestigung 7 angebracht. Dieser Halter 6 trägt zwei parallel zueinander ausgerichtete Führungsbuchsen 8, welche im dargestellten Ausführungsbeispiel in einer horizontalen Ebene liegen. In die Führungsbuchsen 8 sind nicht dargestellte Gleit- oder Wälzlager eingepresst.

Die Führungsbuchsen 8 dienen zur Aufnahme von zwei zylindrischen Führungssäulen 9, welche im gleichen Abstand wie die Führungsbuchsen 8 zueinander angeordnet sind. Die Führungssäulen 9 sind an ihren in die Führungsbuchsen 8 einführbaren Enden mit einer Einführungsschrägung 10 versehen und weisen zusätzlich noch abgerundete Stirnseiten 11 auf.

Jede Führungssäule 9 ist in einem Befestigungsklotz 12 gehalten, welcher an der Handhabungsvorrichtung 15 befestigt ist.

Die Handhabungsvorrichtung 15 weist ein im Wesentlichen eben ausgebildetes Aufnahmeelement 16 für einen Werkzeughalter 14 auf. Der Werkzeughalter 14 ist als Hohlschaftkegel (HSK-A) nach DIN 69893 ausgebildet und weist zwei unterschiedlich breite und um 180° versetzte Aussparungen 21 in seinem Bundbereich 20 zur eindeutigen Orientierung auf.

Das Aufnahmeelement 16 weist eine U-förmige Aussparung auf, in welche ein am hinteren Rand der Aussparung angeordnetes Orientierungselement 18 hineinragt. Zu beiden Seiten der U-förmigen Aussparung ist jeweils einer der Befestigungsklötze 12 für die Führungssäulen 9 angebracht.

Die Handhabungsvorrichtung 15 ist weiterhin mit einem Handgriff 19 versehen, der vorzugsweise zwei in einer Ebene liegende und sich nach oben und unten erstreckende Griffbereiche aufweist. Diese Art der Griffausbildung erleichtert das Führen der Handhabungsvorrichtung 15 mit zwei Händen.

An der Handhabungsvorrichtung 15 ist ein verstellbares Verriegelungselement 17 gelagert, welches dazu dient, den Werkzeughalter 14 im Aufnahmeelement 16 gegen Herausfallen zu sichern.

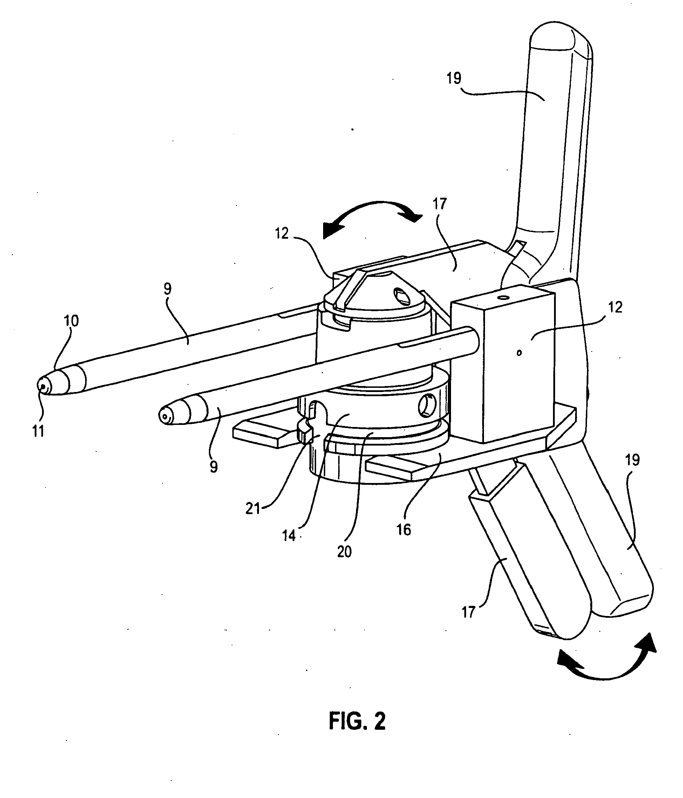

In Figur 2 ist die Handhabungsvorrichtung 15 ohne das zugehörige Werkzeugmagazin in einer Ansicht von schräg vorne dargestellt.

Man erkennt die zwei zylindrischen Führungssäulen 9, welche an ihren in die Führungsbuchsen 8 einführbaren Enden mit der Einführungsschrägung 10 versehen sind und zusätzlich noch abgerundete Stirnseiten 11 aufweisen.

Die Führungssäulen 9 sind in je einem Befestigungsklotz 12 gehalten, welcher an dem Aufnahmeelement 16 der Handhabungsvorrichtung 15 befestigt ist.

Das Aufnahmeelement 16 trägt den Werkzeughalter 14, welcher von dem verschwenkbaren Verriegelungselement 17 gegen Herausfallen gesichert wird.

Weiterhin ist der Handgriff 19 der Handhabungsvorrichtung 15 zu erkennen, der vorzugsweise zwei in einer Ebene liegende und sich nach oben und unten erstreckende Griffbereiche aufweist.

An der nach vorne weisenden Seite des Werkzeughalters 14 ist die mit dem Orientierungselement 5 an der Werkzeugaufnahme 3 in Eingriff bringbare Aussparung 21 zu sehen, die in dem Bundbereich 20 des Werkzeughalters 14 angeordnet ist.

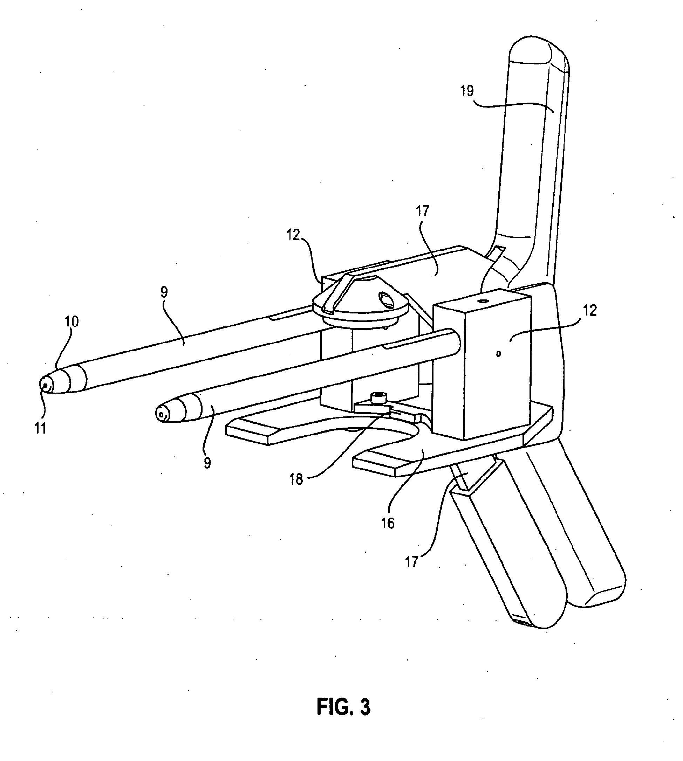

In Figur 3 ist die Handhabungsvorrichtung 15 ohne eingesetzten Werkzeughalter 14 dargestellt.

Auch hier sind die zwei zylindrischen Führungssäulen 9 zu sehen, welche an ihren in die Führungsbuchsen 8 einführbaren Enden mit der Einführungsschrägung 10 versehen sind und zusätzlich noch abgerundete Stirnseiten 11 aufweisen.

Zwischen den die Führungssäulen 9 lagernden Befestigungsklötzen 12 erkennt man das mit der U-förmigen Ausnehmung versehene Aufnahmeelement 16, an dem auch das Verriegelungselement 17 für den Werkzeughalter 14 und der Handgriff 19 gelagert sind. Am hinteren Rand des Aufnahmeelementes 16 ist das optionale Orientierungselement 18 angeordnet, welches in die hintere Aussparung 21 im Bundbereich 20 des Werkzeughalters 14 eingreifen kann, um den Werkzeughalter 14 lagerichtig zu positionieren.

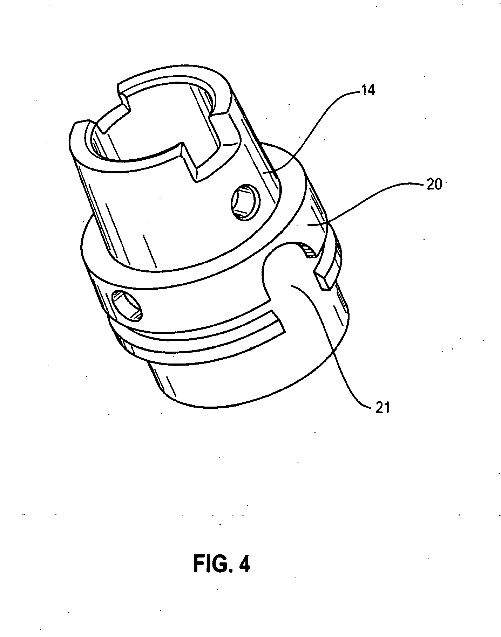

In Figur 4 ist der Werkzeughalter 14 gezeigt, der an seinem Bundbereich 20 die beiden um 180° versetzten Aussparungen 21 aufweist, von denen allerdings in Figur 4 nur eine zu sehen ist.

Die erfindungsgemäße Handhabungsvorrichtung 15 arbeitet wie folgt:

Zunächst wird ein Werkzeughalter 14 derart in die U-förmige Aussparung des Aufnahmeelementes 16 der Handhabungsvorrichtung 15 eingesetzt, dass das Orientierungselement 18 in eine der im Bundbereich 20 des Werkzeughalters 14 angeordneten Aussparungen 21 eingreift. Da die beiden Aussparungen 21 an dem Werkzeughalter 14 um 180° zueinander versetzt sind, weist die andere im Bundbereich 20 des Werkzeughalters 15 angeordnete Aussparung 21 nach vorne.

Jetzt wird die Handhabungsvorrichtung 15 mit dem Werkzeughalter 14 zu einer Befestigungsstelle 13 an der Werkzeugaufnahme 3 des Magazinrings 2 bewegt und die Führungssäulen 9 in die Führungsbuchsen 8 eingeführt. Dadurch gleitet die Handhabungsvorrichtung 15 exakt und winkelgenau in Richtung auf die Werkzeugaufnahme 3, ohne dass die Werkzeugaufnahme 14 verkantet werden kann. Wenn die Handhabungsvorrichtung 15 weit genug vorgeschoben worden ist, ergreift die als Halteklammer ausgebildete Werkzeugaufnahme 3 den Werkzeughalter 14 und hält ihn. Dabei greift das Orientierungselement 5 an der Werkzeugaufnahme 3 in die nach vorne gerichtete Aussparung 21 an dem Werkzeugträger 14 ein und positioniert ihn. Jetzt wird das Verriegelungselement 17 gelöst und die Handhabungsvorrichtung 15 kann aus den Führungsbuchsen 8 herausgezogen werden.

Das Entnehmen eines Werkzeughalters 14 aus dem Werkzeugmagazin erfolgt in umgekehrter Reihenfolge.

Alternativ können die Führungsbuchsen auch an einem schwenkbaren Pendel angebracht sein. Hierbei besitzt die Handwechselzange zwei Raumachsen, nämlich eine rotative Schwenkachse und eine lineare Führungsachse.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung, wie er in Anspruch 1 definiert ist, sowie ihre Äquivalente zu verlassen.

### Bezugszeichenliste

- 1: Lagergestell
- 2: Magazinring
- 3: Werkzeugaufnahme
- 4: Befestigung
- 5: Orientierungselement
- 6: Halter
- 7: Befestigung
- 8: Führungsbuchse
- 9: Führungssäule
- 10: Einführungsschrägung
- 11: Stirnseite
- 12: Befestigungsklotz
- 13: Befestigungsstelle
- 14: Werkzeughalter
- 15: Handhabungsvorrichtung
- 16: Aufnahmeelement
- 17: Verriegelungselement
- 18: Orientierungselement
- 19: Handgriff
- 20: Bundbereich
- 21: Aussparung

## Patentansprüche

1. Kombination aus Handhabungsvorrichtung (15) und Werkzeugmagazin zum manuellen Einlegen eines Werkzeughalters (14) in das Werkzeugmagazin bzw. Entnehmen eines Werkzeughalters (14) aus dem Werkzeugmagazin einer Werkzeugmaschine, wobei die Handhabungsvorrichtung (15) einen Handgriff (19) zum manuellen Greifen und Führen der Handhabungsvorrichtung (15), ein Aufnahmeelement (16) zum Aufnehmen des Werkzeughalters (14), ein verstellbares Verriegelungselement (17) zum Sichern des Werkzeughalters (14) in dem Aufnahmeelement (16) gegen Herausfallen, und ein Orientierungselement (18), das eine definierte Drehwinkelposition des Werkzeughalters (14) in dem Aufnahmeelement (16) erzwingt, aufweist, **dadurch gekennzeichnet, dass** die Handhabungsvorrichtung (15) ein erstes Führungselement (9) aufweist, welches beim Einlegen oder Entnehmen des Werkzeughalters mit einem mit dem Werkzeugmagazin verbundenen zweiten Führungselement (8) derart zusammenwirkt, dass die Bewegungsmöglichkeit der Handhabungsvorrichtung auf eine einzige lineare Raumachse (X, Y, Z) eingeschränkt ist.

2. Kombination nach Anspruch 1, **dadurch gekennzeichnet, dass** das mit der Handhabungsvorrichtung (15) verbundene erste Führungselement aus mindestens einer stabförmigen, vorzugsweise zylindrischen Führungssäule (9) besteht.

3. Kombination nach Anspruch 2, **dadurch gekennzeichnet, dass** das mit dem Werkzeugmagazin verbundene zweite Führungselement aus mindestens einer hülsenförmigen Führungsbuchse (8) zur Aufnahme der stabförmigen Führungssäule (9) besteht.

4. Kombination nach einem der Ansprüche 1 bis 3, **dadurch gekennzeichnet, dass** das Werkzeugmagazin ein feststehendes Lagergestell (1) für einen drehbaren Magazinring (2) aufweist, und dass Werkzeugaufnahmen (3) zur Halterung der Werkzeughalter (14) an dem drehbaren Magazinring (2) befestigt sind.

5. Kombination nach Anspruch 4 **dadurch gekennzeichnet, dass** zwei parallel zueinander verlaufende und vorzugsweise in einer horizontalen Ebene angeordnete Führungssäulen (9) vorgesehen sind, welche mit zwei an dem Lagergestell (1) des Werkzeugmagazins befestigten Führungsbuchsen (8) zusammenwirken.

6. Kombination nach einem der Ansprüche 3 und 5, **dadurch gekennzeichnet, dass** in den Führungsbuchsen (8) Gleit- oder Wälzlager angeordnet, insbesondere eingepresst sind.

7. Kombination nach einem der Ansprüche 2, 3 oder 5, **dadurch gekennzeichnet, dass** die Führungssäulen (9) an ihren Stirnseiten (11) abgerundet und mit einer Einführungsschrägung (10) versehen sind.

8. Kombination nach einem der Ansprüche 2, 3, 5 oder 7, **dadurch gekennzeichnet, dass** jede Führungssäule (9) in einem Befestigungsklotz (12) gelagert ist, der an dem Aufnahmeelement (16) angebracht ist.

## Claims

1. Combination of a handling apparatus (15) and a tool magazine for manually inserting a tool holder (14) into the tool magazine or removing a tool holder (14) from the tool magazine of a machine tool, wherein the handling apparatus (15) has a handle (19) for manually gripping and guiding the handling apparatus (15), a receiving element (16) for receiving the tool holder (14), an adjustable locking element (17) for securing the tool holder (14) in the receiving element (16) so that it does not fall out, and an orientation element (18) which enforces a defined rotary angle position of the tool holder (14) in the receiving element (16), **characterized in that** the handling apparatus (15) has a first guide element (9) which, when the tool holder is inserted or removed, interacts with a second guide element (8) connected to the tool magazine such that the movement capability of the handling apparatus is restricted to a single linear spatial axis (X, Y, Z).

2. Combination according to Claim 1, **characterized in that** the first guide element connected to the handling apparatus (15) consists of at least one rod-like, preferably cylindrical guide column (9).

3. Combination according to Claim 2, **characterized in that** the second guide element connected to the tool magazine consists of at least one sleeve-like guide bushing (8) for receiving the rod-like guide column (9).

4. Combination according to one of Claims 1 to 3, **characterized in that** the tool magazine has a fixed storage frame (1) for a rotatable magazine ring (2), and **in that** tool receptacles (3) for holding the tool holders (14) are secured to the rotatable magazine ring (2).

5. Combination according to Claim 4, **characterized by** the provision of two guide columns (9), which extend parallel to one another and are preferably arranged in a horizontal plane, and which interact with two guide bushings (8) secured to the storage frame (1) of the tool magazine.

6. Combination according to either of Claims 3 and 5, **characterized in that** plain bearings or roller bearings are arranged in the guide bushings (8), in particular pressed into the latter.

7. Combination according to one of Claims 2, 3 or 5, **characterized in that** the guide columns (9) are rounded at their end faces (11) and are provided with an insertion bevel (10).

8. Combination according to one of Claims 2, 3, 5 or 7, **characterized in that** each guide column (9) is mounted in a fixing block (12) which is attached to the receiving element (16).

## Revendications

1. Combinaison d'un dispositif de maniement (15) et d'un magasin d'outils servant à mettre en place manuellement un porte-outil (14) dans le magasin d'outils ou servant à retirer un porte-outil (14) du magasin d'outils d'une machine-outil, sachant que le dispositif de maniement (15) présente une poignée (19) servant à saisir manuellement et à guider le dispositif de maniement (15), un élément de réception (16) servant à recevoir le porte-outil (14), un élément de verrouillage (17) réglable servant à éviter toute sortie du porte-outil (14) se trouvant dans l'élément de réception (16), et un élément d'orientation (18) qui contraint le porte-outil (14) à garder une position d'écart angulaire dans l'élément de réception (16), **caractérisé en ce que** le dispositif de maniement (15) présente un premier élément de guidage (9) qui coopère lors de la mise en place ou du retrait du porte-outil avec un deuxième élément de guidage (8) relié au magasin d'outils de telle sorte que l'éventuel déplacement du dispositif de maniement est limité à un seul axe spatial linéaire (X, Y, Z).

2. Combinaison selon la revendication 1, **caractérisée en ce que** le premier élément de guidage relié au dispositif de maniement (15) se compose au moins d'une colonne de guidage (9) en forme de baguette, de préférence cylindrique.

3. Combinaison selon la revendication 2, **caractérisée en ce que** le deuxième élément de guidage relié au magasin d'outils se compose d'au moins une douille de guidage (8) en forme de manchon servant à recevoir la colonne de guidage (9) en forme de baguette.

4. Combinaison selon l'une quelconque des revendications 1 à 3, **caractérisée en ce que** le magasin d'outils présente un casier de stockage (1) fixe pour un anneau de magasin (2) rotatif, et **en ce que** des logements d'outils (3) sont fixés pour maintenir le porte-outil (14) sur l'anneau de magasin (2) rotatif.

5. Combinaison selon la revendication 4, **caractérisée en ce que** sont prévues deux colonnes de guidage (9) s'étendant de manière parallèle l'une par rapport à l'autre et disposées de préférence dans un plan horizontal, lesquelles coopèrent avec deux douilles de guidage (8) fixées au niveau du casier de stockage (1) du magasin d'outils.

6. Combinaison selon l'une quelconque des revendications 3 et 5, **caractérisée en ce que** des paliers à glissement ou à roulement sont disposés, en particulier enfoncés dans les douilles de guidage (8).

7. Combinaison selon l'une quelconque des revendications 2, 3 ou 5, **caractérisée en ce que** les colonnes de guidage (9) sont arrondies au niveau de leurs côtés frontaux (11) et sont pourvues d'une partie oblique d'introduction (10).

8. Combinaison selon l'une quelconque des revendications 2, 3, 5 ou 7, **caractérisée en ce que** chaque colonne de guidage (9) est logée dans un bloc de fixation (12) qui est placé sur l'élément de réception (16).
